# EUROPÄISCHE PATENTSCHRIFT

(11) **EP 2 371 511 B1**
(45) Veröffentlichungstag und Bekanntmachung des Hinweises auf die Patenterteilung: **06.03.2013**
(21) Anmeldenummer: 11160670.3
(22) Anmeldetag: 31.03.2011
(51) Int. Cl.: B29C 45/14, B29C 45/16, A47C 5/12

(54) **Verbundbauteil mit Insert und Verfahren zu seiner Herstellung**
Composite component with insert and method for the production therof
Composant composite doté d'un insert et son procédé de fabrication

(30) Priorität: 31.03.2010 EP 10003499
(43) Veröffentlichungstag der Anmeldung: 05.10.2011
(73) Patentinhaber: Bayer MaterialScience AG, 51368 Leverkusen (DE)
(72) Erfinder: Dorin, Florian, 50679 Köln (DE); Grosser, Ulrich, 51515 Kürten (DE); Klinkenberg, Christoph, 50667 Köln (DE); Burger, Martin, 51399 Burscheid (DE)
(74) Vertreter: BIP Patents

(56) Entgegenhaltungen:
- EP-A1- 1 022 105
- EP-A1- 2 042 288
- WO-A2-2006/136887
- GB-A- 1 259 349
- US-A- 4 446 185
- US-A- 5 911 936
- US-A1- 2004 164 450

## Beschreibung

Die vorliegende Erfindung betrifft ein Verbundbauteil enthaltend einen Grundkörper aus einem nicht-elastischem Material, und mindestens ein Insert, wobei das Insert ummantelt ist mit einem elastischen Werkstoff. Die vorliegende Erfindung betrifft weiterhin die Herstellung solcher Bauteile sowie Produkte, beispielsweise Möbel oder Gehäuse, enthaltend diese Verbundbauteile.

Es werden heutzutage immer mehr Möbel aus Kunststoffen hergestellt. Beispielsweise wird bei Sitzmöbeln oft eine Sitzschale aus Kunststoff auf Stuhlbeine aus Stahl aufgeschraubt. Um diese Verbindung realisieren zu können, sind in die Sitzschalen metallische Schraubinserts integriert. Diese Inserts werden bereits bei der Herstellung im Spritzgussprozess in das Werkzeug eingelegt und von der Kunststoffschmelze umschlossen. Beim Abkühlen zieht sich die Kunststoffschmelze aufgrund des erheblich höheren Wärmeausdehnungskoeffizienten deutlich mehr zusammen, als das Insert. Der Kunststoff schrumpft auf das Insert auf. Das Insert verhindert ein weiteres Zusammenziehen, so dass sich im Kunststoff Spannungen aufbauen. Im Falle von Teilkristallinen Kunststoffen können diese Spannungen relaxieren, im Falle von amorphen Kunststoffen ist dies jedoch nicht möglich. Bei amorphen Kunststoffen können sich in einem derartigen Fall nach einer gewissen Zeit Spannungsrisse bilden und damit zumindest optisch zu einem Bauteilversagen führen. Ein solches Bauteilversagen kann weiterhin auch immer dann auftreten, wenn ein Metallinsert in einen Körper aus einem nicht-elastischen Material, z.B. aus Glas oder Hartholz, eingefügt wird.

Des weiteren wird es, beispielsweise im Hinblick auf den Sitzkomfort und die Langlebigkeit von Möbeln, als vorteilhaft angesehen, wenn die Bauteile dämpfende Eigenschaften aufweisen.

Eine Aufgabe dieser Erfindung war es daher, eine Möglichkeit zu entwickeln, wie man der Entstehung von Spannungsrissen bei einem Verbundbauteil enthaltend mindestens ein Metallinsert entgegenwirken kann. Es sollen also weder bei Herstellung noch bei Gebrauch keine Spannungs- oder Lastspitzen im Bauteil auftreten. Das Auftreten von internen Spannungen, die zu Bauteilverzug und/oder Materialversagen führen können, soll vermieden werden, so dass auch amorphe Thermoplaste und spannungsrissempfindliche Materialien eingesetzt werden können.

Es sind dazu aus US2004/0164450 A1 Inserts bekannt, die durch Einbringung einer elastischen Komponente die thermische Längenausdehnung ausgleichen können. Diese Inserts sind geschlossene Inserts, die nur diesen einen Nutzen haben. Der in dieser Druckschrift genannte Ansatz ist auch für das Füllen von Rohren mit Schaum aus EP 2 042 288 A1 bekannt oder für Steckverbindungen aus US 5911 936 A.

EP 022 105 A1 beschreibt einen aus einem Schaumkern und einer Deckschicht bestehdenden Gegenstand und ein Verfahren zu seiner Herstellung Aus WO2006/136887 sind Systeme für Kühlzellen bekannt, die hergestellt werden durch die Verbindung eines Rahmens mit externen und internen Metallplatten, die Metallplatten-Komponenten dann mit der Rückwand der Zelle kombiniert werden, US-A-4, 446, 185 beschreibt einen Artikel mit einer Oberflächenschicht, der über ein reaktives Spritzgießverfahren aus einem geschäumten Polyurethan Material hergestellt wird, wobei in die Oberflächenschicht Löcher enthält, in die ein Gewinde eingebracht wird, das von der Oberflächenschicht umschlossen wird.

Es ist daher eine weitere Aufgabe dieser Erfindung ein Insert bereitzustellen, welches zusätzlich zu seiner Funktion dämpfende Eigenschaften aufweist. Dadurch soll das gesamte dämpfende Verhalten des Kunststoffbauteils verbessert werden.

Des Weiteren besitzt ein herkömmliches Insert keine dämpfenden Eigenschaften, die Last wird direkt vom Insert in das Bauteil eingeleitet oder andersherum. Über das richtige Dämpfungsverhalten könnte z.B. die Wertigkeit des Sitzkomforts erhöht werden. Des weiteren Resistenz gegen Schädigungen durch Fallen (Impact) bei z.B. Gehäusen könnte durch ein dämpfendes Verhalten erhöht werden.

Daher ist eine weitere Aufgabe dieser Erfindung, ein Insert mit zusätzlich dämpfenden Eigenschaften zu entwickeln.

Der Erfindung liegt weiterhin die Aufgabe zugrunde, Verfahren zur Herstellung des Verbundbauteils bereitzustellen.

Diese Aufgaben konnten überraschenderweise gelöst werden durch die vorliegende Erfindung, bei der über einen Ausgleich der unterschiedlichen Längenausdehnungen zwischen nicht-elastischem Material und Insert Spannungsrisse vermieden werden können und die Ummantelung einerseits Zugkräfte aufnehmen und andererseits kann sie unter Druck verdrängt werden.

Gegenstand der Erfindung ist ein Verbundbauteil enthaltend einen Grundkörper aus einem nicht-elastischem Material, insbesondere einem Thermoplasten, und mindestens eine insbesondere metallisches Insert, wobei das metallische Insert ummantelt ist mit einem elastischen Werkstoff, wobei der elastische Werkstoff eine Wandddicke von mindestens 5 % des Durchmessers des Inserts aufweist und zwischen Grundkörper und metallischem Insert im wesentlichen kein Kontakt besteht und das Insert eine Vertiefung enthält, in die der elastische Werkstoff unter Druck verdrängt werden kann.

Der Ausdruck "im wesentlichen kein Kontakt" bedeutet im Sinne der vorliegenden Erfindung, dass zwischen Grundkörper und metallischem Insert keine vollständige formschlüssige Verbindung besteht, das heißt dass weniger als 95 %, bevorzugt weniger als 50 %, weiterhin bevorzugt weniger als 30 %, besonders bevorzugt weniger als 20 % und ganz besonders bevorzugt weniger als 10 % der Außenoberfläche des metallischen Inserts mit dem Thermoplasten formschlüssig verbunden sind. Auch ganz besonders bevorzugt gehen Grundkörper und Insert keine Verbindung miteinander ein.

Gegenstand der Erfindung ist weiterhin ein Verfahren zur Herstellung eines solchen Verbundbauteils sowie Fertigteile, enthaltend solche Verbundbauteile als Komponenten.

Als nicht-elastische Materialien für den Grundkörper kommen insbesondere thermoplastische Kunststoffe infrage. Es eignen sich insbesondere ein unverstärkter, verstärkter und/oder gefüllter Kunststoff auf Basis von Polyamid (PA), Polyester, insbesondere Polyethylenterephthalat (PET), Polybutylenterephthalat (PBT), Polyacrylate, insbesondere Polymethylmethacrylat (PMMA), Polybutylenterephthalat (PBT), Polystyrol (PS), syndiotaktisches Polystyrol, Acrylnitril-Butadien-Styrol (ABS), Polyolefin, insbesondere Polypropylen (PP), Polyethylen (PE), Polycarbonat (PC), Copolycarbonat (CoPC), Copolyestercarbonat oder eine Mischung dieser Kunststoffe. In einer bevorzugten Ausführungsform handelt es sich bei den Kunststoffen um amorphe thermoplastische Kunststoffe, insbesondere um Polycarbonat, Copolycarbonat, Copolyestercarbonat, PC-Blends und Polymethylmethacrylat.

Solche Inserts können als Dämpfer auch in Anwendungen mit Glas, Keramiken und Holz und vielen anderen Werkstoffen verwendet werden, um so die dämpfenden Eigenschaften in Kombination mit Verschraubbarkeiten auszunutzen.

Einen Überblick über nicht-elastische Materialien (thermoplastisch, duroplastisch sowie z.B. anorganisch) gibt F. Johannaber, W. Michaeli: "Handbuch Spritzgießen", Hanser Verlag, München 2004, Seiten 100-105.

Das Insert ist aus Metall und anderen gängigen Werkstoffen für Inserts, z.B. Keramiken und Duromere. Insbesondere ist das Insert aus Metall, beispielsweise aus Stahl, Aluminium, Legierungen dieser Metalle oder Messing.

Üblicherweise weisen solche Inserts ein Schraubgewinde auf. Die Erfindung ist jedoch nicht auf solche Inserts beschränkt, sondern kann bei jeder Art von Einlegern, z.B. auch mit Schnappverbindungen etc. zum Einsatz kommen. Im Fall von Schraubgewinden sind die Schraubengrößen M1 bis M10, insbesondere M2 bis M12 und ganz besonders M4 bis M6 (Schraubengrößenangaben gemäß Norm für metrische Gewinde und metrische Feingewinde DIN 13 (Quelle: http://www.gewinde-normen.de/iso-feingewinde.html, Stand März 2010) bevorzugt. Gleichfalls sind Feingewinde und solche Schrauben mit vergleichbarer Größe nach anderen Normen und Gewindearten bevorzugt. In einer anderen Ausführungsform sind Schraubgewinde der Größe M4 bis M8 besonders bevorzugt. Für Anwendungen im Elektro / Elektronikbereich, z.B. Fernserher oder Laptops werden zumeist Schraubgewinde in Größen kleiner oder gleich M4 verwendet. Dabei können herkömmliche Standardinserts als Grundlage, d.h. als Einleger für das Elastomer verwendet werden, oder aber auch neu gestaltete Inserts verwendet werden. In einer Ausführungsform sind an den Inserts mechanische (formschlüssige) Verankerungen vorgesehen, um die Haftung zwischen Elastomer und Insert zu unterstützen. Solche Inserts haben dann auch in der Regel eine raue Oberfläche.

Bei dem elastischen Werkstoff, (auch als Elastomer oder elastisches Material bezeichnet) mit dem das Insert ummantelt wird, handelt es sich um ein duroplastisches oder thermoplastisches Elastomer, beispielsweise um ein Silikon, ein thermoplastisches Polyurethan, Polyurethan, Natur- oder Synthesekautschuke oder dergleichen. Geeignete Elastomere sind dem Fachmann beispielsweise aus F. Johannaber, W. Michaeli: "Handbuch Spritzgießen", Hanser Verlag, München 2004, Seiten 52-56; 77-80 und 100 ff. bekannt, zu Polyurethanen und ihre Verarbeitung siehe Konrad Uhlig, "Polyurethan Taschenbuch", Hanser, München 2006, S. 90 ff.

Diese Werkstoffe können als Vollmaterial oder aber auch geschäumt verwendet werden. Die Verarbeitungsverfahren sind beispielsweise Spritzgießen, Gießen, oder Schäumen und dem Fachmann im Prinzip bekannt, z.B. aus Georg Menges, "Einführung in die Kunststoffverarbeitung" Hanser Verlag, 2.Auflage von 1979, ISBN 3-446-12863-8, S. 51 ff. und F. Johannaber, W. Michaeli: "Handbuch Spritzgießen", Hanser Verlag, München 2004, S. 166 -656.

In einer bevorzugten Ausführungsform handelt es sich bei dem nicht-elastischen Material um einen Thermoplasten, insbesondere um einen amorphen Thermoplasten. Zur Herstellung eines solchen Verbundbauteils wird beispielsweise das Insert mit dem elastischen Werkstoff in einer ausreichenden Wanddicke ummantelt, ehe es mit dem Thermoplasten umspritzt wird. Eine ausreichende Wanddicke heißt hier eine Wanddicke des elastischen Werkstoffs von 5% bis 100% des maximalen Außendurchmessers des metallischen Inserts, vorzugsweise zwischen 8% und 50% und besonders bevorzugt zwischen 10% und 30%. Dabei bezieht sich hier die Wanddicke des Elastomers - auf die Wanddicke in dem Bereich, in dem das Insert von dem wenigsten Elastomer umgeben ist, d.h. wo die Ummantelung am dünnsten ist.

Die Wanddicke der Elastomerummantelung soll besonders bevorzugt 10-30 % des maximalen Außendurchmessers des Metallinserts betragen. Wenn beispielsweise das vom Silikon ummantelte Metallinsert an seiner breitesten Stelle einen Außendurchmesser von 10 mm hat, dann soll die Dicke der ummantelnden Elastomerschicht im dünnsten Bereich, also minimal, 0,5-10,0 mm, vorzugsweise 1-3 mm dick sein.

Der Vorteil des elastischen Werkstoffes ist seine um ein Vielfaches höhere Dehnfähigkeit im Vergleich zu Thermoplasten. Beim elastischen Werkstoff kann es aufgrund seiner Eigenschaften hier nicht zu Spannungsrissen kommen, wenn die Schmelze auf das Insert aufschrumpft. Vielmehr kann dieser Werkstoff das Aufschrumpfen mit seiner hohen Elastizität abfedern. Der Thermoplast um den weichen Werkstoff schrumpft so nicht mehr auf den steifen Metallkern des vorzugsweise metallischen Inserts auf, er schrumpft statt dessen auf den elastischen Werkstoff, der dabei entweder die Spannungen aufnimmt oder leicht verdrängt wird und so die Spannungen auf den Thermoplasten minimiert.

oder ähnliches auf, in die das Elastomer verdrängt werden kann.

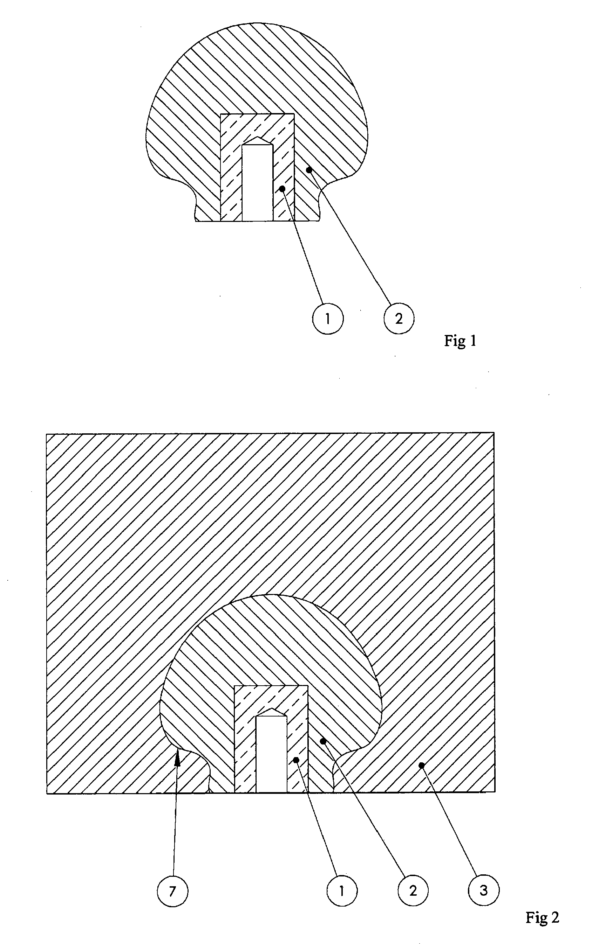

Hierzu muss die Ummantelung ausreichend dick sein. Sie ist so auszulegen, dass bei dem Spritzgussprozess ein formschlüssiger Verbund entsteht, da nicht alle elastischen Werkstoffe ausreichend adhäsive Bindungen zu den verschiedenen Thermoplasten erzielen können. (Fig 2). Ein weiterer Vorteil der Ummantelung besteht darin, dass sie, je dicker sie ausgelegt ist, umso größere Dämpfungseigenschaften aufweist. Während ein Sitz ohne ummantelte Inserts annähernd keine Dämpfungseigenschaften beim Setzen zeigt, kann mit diesen neuartigen Inserts eine höhere Wertigkeit erzielt werden. Bei herkömmlichen Inserts wird die Last direkt vom Insert in das Bauteil eingeleitet oder andersherum. Bei den neuartigen ummantelten Inserts wird die Last vom Elastomer aufgenommen, daher kann z.B. die Wertigkeit des Sitzkomforts erhöht werden. Auch die Resistenz gegen Schädigungen durch Fallen (Impact) z.B. bei Gehäusen kann durch ein dämpfendes Verhalten erhöht werden. Der Kraftverlauf bzw. die Bremsbeschleunigung beim Setzen bzw. beim Fallen wird so anfänglich von der elastischen Komponente bestimmt und nicht vom elastischsten Teil des thermoplastischen Grundkörpers, der im Vergleich zum Elastomer noch immer sehr steif ist. Der Modul von Stahl liegt bei 210 GPa, nicht-elastische Thermoplasten haben einen Modul von über 1 GPa, Polycarbonate beispielsweise von 2,4 GPa (+/- 0,5 GPa), Elastomere haben einen Modul von unter 0,05 GPa. Anstelle des Moduls spricht man bei elastischen Werkstoffen auch oft von Shorehärten, gemessen nach DIN53505 bzw. ISO868. Die hier geeigneten Shorehärten liegen zwischen 20 Shore-A bis 60 Shore-D, vorzugsweise zwischen 30 Shore-A und 70 Shore-A. Durch eine Anpassung von Shorehärte und Geometrie des dämpfenden Bereichs des Inserts kann das Dämpfungsverhalten gezielt einer Federkennlinie nachempfunden werden und so das Dämpfungsverhalten den individuellen Bedürfnissen angepasst werden. Hierbei liegt die besondere Herausforderung jedoch auch darin, dass die elastischen Werkstoffe meist volumenkonstante Eigenschaften haben. Dieser Umstand führt zur Notwendigkeit, dass der Dämpfungseffekt, der durch eine Verdrängung von Material funktioniert, nur erzielt werden kann, wenn die räumlichen Gegebenheiten derart sind, dass auch Material verdrängt werden kann. Im Falle von volumenkonstanten Materialien muss hierzu eine Tasche, also ein oder mehrere mit Gas, insbesondere Luft, gefüllte Volumina vorhanden sein, denn Gase sind im Gegensatz zu den elastischen Werkstoffen kompressibel. Diese können im einfachsten Falle dadurch bereit gestellt werden, dass man ein geschäumtes Material verwendet.

Eine andere Ausführungsform besteht darin, dass beim Herstellen des Verbundkörpers (Metallinsert+Elastomer) ein an beiden Seiten geöffnetes Insert (Hülse) verwendet wird und so der Stift oder die Schraube, die bei dem Herstellungsprozess in das Insert zur Abdichtung gedreht werden muss, durch das Insert hindurch gedreht wird, so das ein bestimmter Überstand herrscht, vorzugsweise länger als 1 mm lang und in der Breite des verwendeten Stiftes. Beim Entformen entsteht so ein Hohlraum innerhalb des Verbundkörpers, speziell zwischen Insert und elastischer Ummantelung, in dem im verschraubten Zustand eine bestimmte Menge an Gas, bevorzugt Luft, enthalten ist, das komprimiert werden kann. Beim Verschrauben wird die Schraube nicht bis an das Ende des Hohlraumes gedreht, sondern es wird nur ein Teil der Gewindebohrung wird mit der Schraube gefüllt.

Im Falle von transparenten, amorphen Thermoplasten bietet es sich sogar an, transparente elastische Werkstoffe wie LSR ("Liquid Silicone Rubber") als Insertummantelung zu verwenden. So kann ein einheitlicheres Erscheinungsbild erzielt werden. In den Bereichen der Inserts befinden sich häufig aufwändige Verrippungen, die das Licht unterschiedlich brechen. In diesem Fall fällt eine transparente Insertummantelung auch mit einem anderem Brechungsindex als der Thermoplast kaum ins Auge.

Bei Anwendungen, in denen sich die Inserts nicht durch oben beschriebene Verrippungen o.ä. "verstecken" lassen, können Thermoplasten und Elastomere bezüglich Brechungsindex und Einfärbung einander angepasst werden. Auch in diesem Fall lässt sich per Auge der Elastomer nur schwer vom umgebenden Thermoplast unterscheiden.

Bei der Auslegung der Ummantelung der Inserts mit dem elastischen Werkstoff ist zu beachten, dass an allen Kanten und Ecken zwischen Elastomer und umspritzendem Thermoplast Geometrien vorgesehen werden, die so ausgelegt werden, dass beim Umspritzen mit dem Thermoplasten keine Luftblasen und Spannungsrissherde entstehen. Scharfe Kanten bzw. spitze Ecken mit kleinen bzw. nicht-abgerundeten Winkeln (< 90 °C, insbesondere < 45 °C) oder Radien beispielsweise kleiner 2 mm oder kleiner 1 mm sind also zu vermeiden. Vergleichbares gilt natürlich auch für dreidimensionale Freiformflächen. Weiterhin sollte die Ummantelung möglichst kompakt ausgelegt werden. "Kompakt" bedeutet hierbei, dass die elastische Ummantelung ein möglichst großes Volumen bei kleiner Oberfläche, aber unter Berücksichtigung des späteren Formschlusses, aufweist, so dass die Verformung unter dem Einspritzdruck beim Einspritzen des Thermoplasten minimal ist.

Der elastische Werkstoff muss mit dem Thermoplasten eine formschlüssige oder stoffschlüssige Verbindung erzeugen, um so ein späteres Lösen durch übermäßige Lasten zu verhindern bzw. eine maximale Missbrauchs- bzw. Löselast zu erhalten. Eine formschlüssige Verbindung ist beispielsweise bei der Verwendung von Polycarbonat und Silicon nötig, eine stoffschlüssige Verbindung mit ausreichender Haftung kann beispielsweise im Falle von Polycarbonat und TPU ausgelegt werden.

Bei der Auslegung des Thermoplasten ist zu beachten, dass dieser wirklich nur mit dem elastischen Werkstoff in Verbindung kommt und nicht den metallischen Teil vollständig stoffschlüssig umschließt, das heißt das Thermoplast und Elastomer im wesentlichen keinen Kontakt haben. So wird gewährleistet, dass die unterschiedlichen Wärmedehnungen berücksichtigt werden und die auf den Grundkörper einwirkenden Kräfte nur durch das elastische Material auf das Metall übertragen werden. Des weiteren können Stöße maximal gedämpft werden, so dass es nicht zu einer Schädigung des thermoplastischen Grundkörpers kommt.

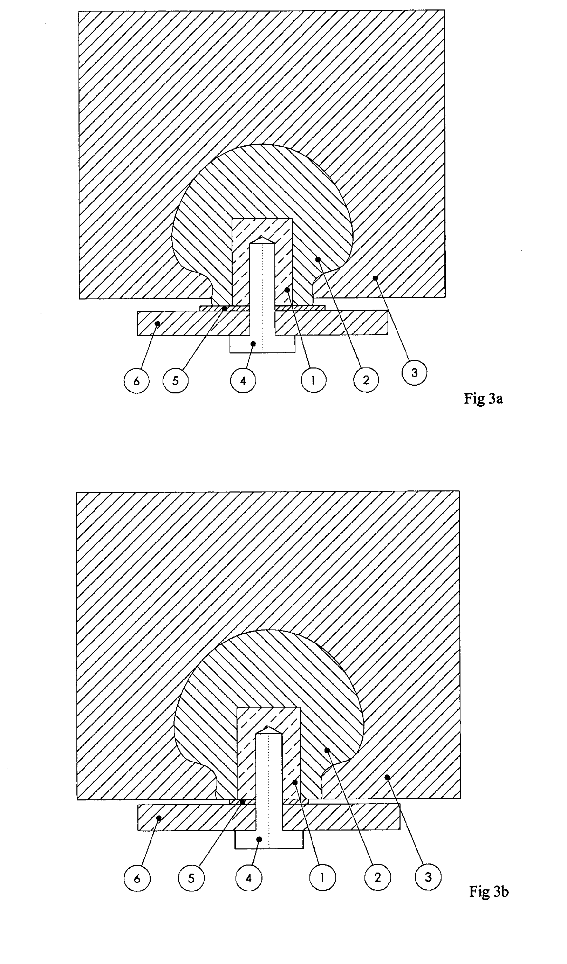

Auch für den späteren Zusammenbau wird vorteilhafterweise beachtet, dass im Falle von Schraubeninserts die Schraube an das Insert anschließt und die Kraft der Schraubenkopfanlagefläche nicht auf den Thermoplasten wirkt (Fig. 3 a und Fig 3b). Dazu muss der elastische Werkstoff so breit sein, dass die Kraft in das Insert und nicht in den Thermoplasten eingeleitet wird. Insbesondere ist es vorteilhaft, wenn der elastische Werkstoff breiter als der Durchmesser des Schraubenkopfes bzw. einer Unterlegscheibe ausgelegt ist. Durch die hinterschnittige Auslegung und die nicht unendlich elastischen Eigenschaften der Ummantelung ist es auch möglich, Schrauben an den Inserts ausreichend fest anzuziehen. Ein Beispiel für derartige formschlüssige Verbindungen ist in Fig 1 bzw. Fig 2 dargestellt.

Derartige Inserts lassen sich in einem einfachen, herkömmlichen Spritzgussprozess herstellen.

In einer Ausführungsform wird hierzu ein herkömmliches Insert (z.B. Artikel Nummer 0733 1060 127 / 10, der Firma Böllhoff, Deutschland) in ein Werkzeug eingelegt und mit dem elastischen Werkstoff mittels geeigneten Verarbeitungsverfahren ummantelt. Dieser Vorgang kann auch durch einen Schäumprozess begleitet werden, so dass entweder ein kompakte oder zumindest eine teilweise geschäumte elastische Ummantelung hergestellt wird. Dieses so neu entstandene Insert gemäß der genannten Erfindung kann dann später in weiteren Spritzgussprozessen wie herkömmliche Inserts integriert bzw. eingelegt werden.

Ist der Schmelzepunkt des Elastomers niedriger als der des Thermoplasten, wie es z.B. bei der Kombination von TPU mit PC der Fall ist, so kann im ersten Schritt der Thermoplast mit entsprechenden Aussparungen gespritzt werden. In einem zweiten Schritt wird dann das Insert ins Werkzeug eingelegt und das bereits im ersten Schritt gespritzte thermoplastische Bauteil mit dem elastischen Werkzeug hinterspritzt. Diese Form der Insertumspritzung eignet sich für Schraubengrößen von M1 bis M10, vorzugsweise M4-M6 (Schraubengrößenangaben gemäß Norm für metrische Gewinde und metrische Feingewinde DIN 13 (Quelle: http://www.gewinde-normen.de/iso-feingewinde.html, Stand März 2010).

Das erfindungsgemäße System zeigt eine besondere Flexibilität unter Wärmeeinwirkung. Dehnt sich der thermoplastische Grundkörper aus, so würde ein starr angekoppeltes Verstärkungssystem zu einem Verzug der Baugruppe führen. Die elastische Ummantelung kann eine Relativbewegung zwischen Grundkörper und Insert erlauben und reduziert den Verzug.

Die erfindungsgemäßen Verbundbauteile eignen sich insbesondere zur Herstellung von hochwertigen Möbeln, insbesondere Sitzmöbeln, oder für Gehäuse, beispielsweise im Elektro/Elektronikbereich (z.B. Laptops).

Die beigefügten Zeichnungen sollen die Erfindungen beispielhaft näher erläutern, ohne sie jedoch auf diese Ausführungsformen zu beschränken. Es zeigen:
Fig 1 zeigt eine mögliche Ausführung eines mit einem elastischen Werkstoff 2 ummantelten Inserts 1. Die Ummantelung ist so ausgelegt, dass sie beim Umspritzen mit dem Thermoplast hinterschnittig geformt ist. Der den elastischen Werkstoff umgebende nicht-elastische Werkstoff ist entsprechend nicht dargestellt.
Fig 2 zeigt eine Ausführungsform eines erfindungsgemäßen Verbundbauteils, dass heißt die Ausführungsform eines ummantelten Inserts im eingebauten Zustand (z.B. von einem Thermoplasten als Grundkörper 3 umspritzt). Der Hinterschnitt 7 sichert eine formschlüssige Verbindung zwischen Insert 1 und Grundkörper 3.
Fig 3a zeigt eine mögliche Verbindung des Grundkörpers 3 mit einer Schraube 4, die sicherstellt, dass der Thermoplast des Grundkörpers 3 nicht geschädigt wird. Vorliegend ist das Verbundbauteil mit einer Unterlegscheibe 5 auf einem Metallgestell 6 eines Stuhls o.ä. mit der Schraube 4 verschraubt. In dieser Ausführungsform sind das Insert 1 und die Verschraubung so ausgelegt, dass das Insert 1 aus dem Bauteil herausragt und so die Unterlegscheibe 5 nur gegen das Insert 1 nebst Ummantelung 2 und nicht gegen das Bauteil 3 verschraubt wird.
Fig 3b ist analog zu Fig 3a, hier ist die Unterlegscheibe 5 schmaler als die Ummantelung 2 und kann so ebenfalls nicht gegen das Bauteil drücken.

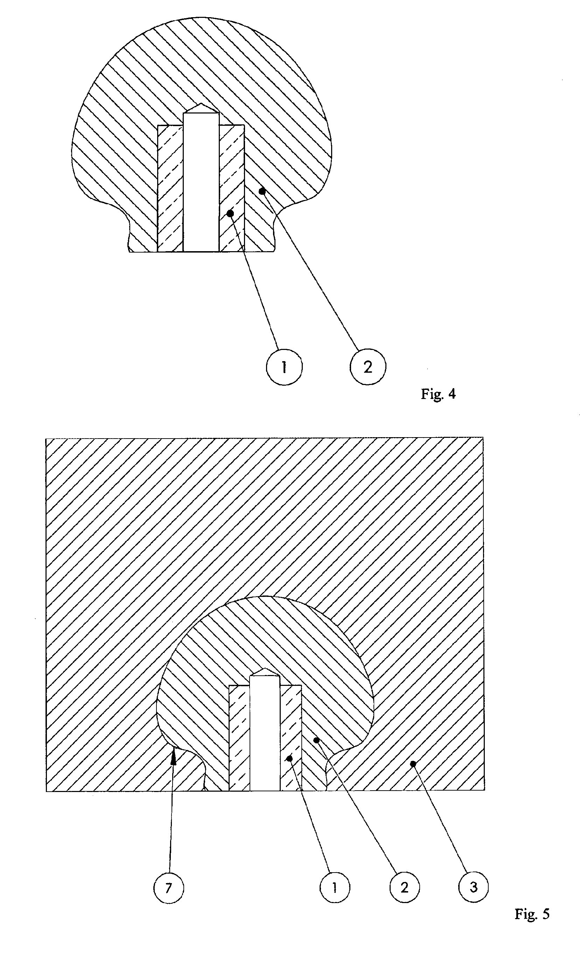

Fig. 4 zeigt eine abgewandelte Form eines mit einem elastischen Werkstoff 2 ummantelten Inserts 1. Das Insert 1 ist, wie dargestellt, als beidseitig offene Hülse ausgeführt. Bei der Herstellung wird ein Stift oder eine Schraube derart in die Hülse eingesteckt bzw. eingeschraubt, dass der Stift bzw. die Hülse über das gegenüberliegende Ende der Hülse hinausragt. Anschließend wird das Insert 1 mit dem elastischen Material in der dargestellten Weise ummantelt, wobei nach dem Entfernen des Stiftes bzw. der Schraube ein Hohlraum innerhalb des elastischen Materials und somit innerhalb des - in Fig. 4 nicht dargestellten - Verbundkörpers verbleibt. Dieser Hohlraum füllt sich beispielsweise mit Luft, die bei Belastung komprimiert werden kann.

Der Verbundkörper, umfassend den Grundkörper 3, das Insert 1 sowie die elastische Ummantelung 2, ist in Fig. 5 dargestellt.

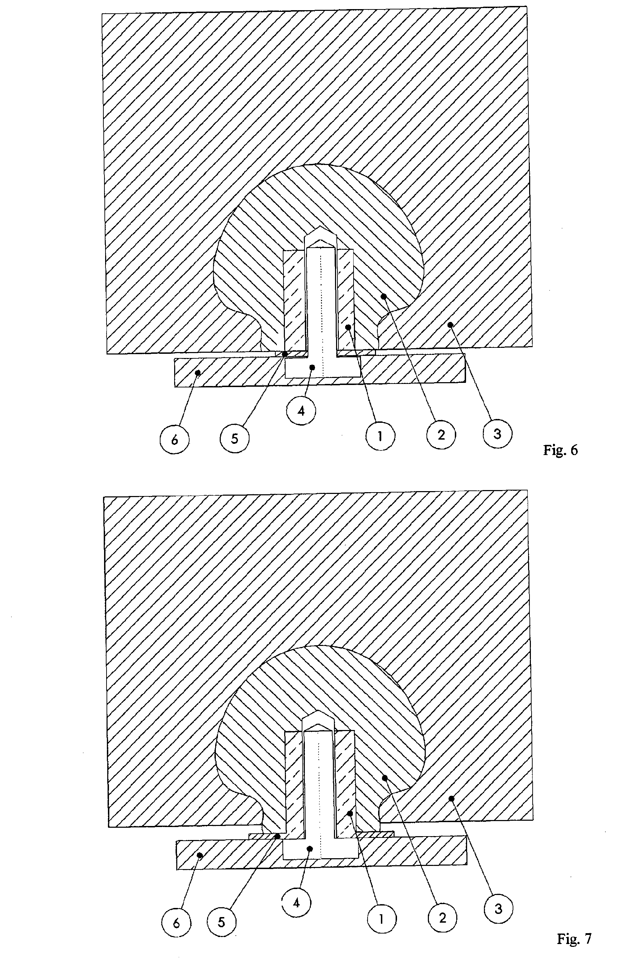

Fig. 6 zeigt nun wiederum einen Verbundkörper. Hierbei wird zur Verbindung des Verbundkörpers mit beispielsweise einem Metallgestell 6 die Schraube nicht bis ans Ende des Hohlraumes gedreht (bzw. es wird eine entsprechend kurze Schraube ausgewählt), so dass ein freies mit Luft gefülltes Volumen verbleibt. Metallgestellt 6 und Grundkörper 3 sind wiederum räumlich voneinander getrennt, vorliegend durch die Unterlegscheibe 5. Im Falle einer Verformung der elastischen Ummantelung 2 bei entsprechender Belastung des Verbundbauteils, kann das elastische Material in das Volumen verdrängt werden, so dass eine wirksame Dämpfung erfolgt.
Fig. 7 zeigt schließlich eine abgewandelte Form des Verbundkörpers der Fig. 6. Hierbei sind das Schraubeninsert 1 und die Unterlegscheibe 5 einstückig ausgeführt, so dass das Schraubeninsert 1 an seinem äußeren stirnseitigen Ende einen radial nach außen weisenden Kragen 5 aufweist. Ferner ragt die elastische Ummantelung 2 in gewissem Maß über den Grundkörper hinaus, was als bevorzugte Ausführungsform angesehen kann, die jedoch nicht unbedingt erforderlich ist.

## Patentansprüche

1. Verbundbauteil enthaltend einen Grundkörper (3) aus einem nicht-elastischem Material, und mindestens ein Insert (1), wobei das Insert mit einem elastischen Werkstoff (2) in einer Wanddicke von mindestens 5 % des Durchmessers des Inserts ummantelt ist und zwischen Grundkörper (3) und Insert im wesentlichen kein Kontakt besteht und das Insert eine Vertiefung enthält, in die der elastische Werkstoff (2) unter Druck verdrängt werden kann.

2. Verbundbauteil nach Anspruch 1, **dadurch gekennzeichnet, dass** das nicht-elastische Material ausgewählt ist aus einem oder mehreren Materialien der Gruppe enthaltend Polyamid (PA), Polyester, insbesondere Polyethylenterephthalat (PET), Polybutylenterephthalat (PBT), Polyacrylate, insbesondere Polymethylmethacrylat (PMMA), Polybutylenterephthalat (PBT), Polystyrol (PS), syndiotaktisches Polystyrol, Acrylnitril-Butadien-Styrol (ABS), Polyolefin, insbesondere Polypropylen (PP), Polyethylen (PE), Polycarbonat (PC), Copolycarbonat (CoPC), Copolyestercarbonat, Keramiken, Holz und Glas.

3. Verbundbauteil nach Anspruch 1, **dadurch gekennzeichnet, dass** es sich bei dem nicht-elastischen Material um einen thermoplastischen Kunststoff handelt.

4. Verbundbauteil nach Anspruch 1, **dadurch gekennzeichnet, dass** es sich bei dem nicht-elastischen Material um einen amorphen thermoplastischen Kunststoff handelt.

5. Verbundbauteil nach Anspruch 2, **dadurch gekennzeichnet, dass** der amorphe thermoplastische Kunststoff ausgewählt ist aus der Gruppe bestehend aus Polycarbonat, Copolycarbonat, Copolyestercarbonat, PC-Blends und Polymethylmethacrylat und Mischungen daraus.

6. Verbundbauteil nach einem der vorhergehenden Ansprüche, **dadurch gekennzeichnet, dass** der elastische Werkstoff eine Shorehärte zwischen 20 Shore-A bis 60 Shore-D, vorzugsweise zwischen 30 Shore-A und 70 Shore-A, gemäß DIN 53505 bzw. ISO868 aufweist.

7. Verbundbauteil nach einem der vorhergehenden Ansprüche, **dadurch gekennzeichnet, dass** es sich bei dem elastischen Werkstoff um ein duroplastisches oder thermoplastisches Elastomer handelt.

8. Verbundbauteil nach einem der vorhergehenden Ansprüche, **dadurch gekennzeichnet, dass** es sich beim dem elastischen Werkstoff um ein Silikon, Polyurethan, TPU oder Kautschuk handelt.

9. Verbundbauteil nach einem der vorhergehenden Ansprüche, **dadurch gekennzeichnet, dass** der elastische Werkstoff geschäumt ist.

10. Verbundbauteil nach einem der vorhergehenden Ansprüche, **dadurch gekennzeichnet, dass** das Insert aus Metall, einem Duromeren oder Keramik ist.

11. Verbundbauteil nach Anspruch 10, **dadurch gekennzeichnet, dass** das Insert aus Metall ist.

12. Verfahren zur Herstellung eines Verbundbauteils nach einem der Ansprüche 1 - 11, umfassend einen Schritt a) Ummanteln eines Inserts mit einem elastischen Werkstoff, optional in Begleitung eines Schäumprozesses.

13. Verwendung eines Verbundbauteils nach einem der Ansprüche 1 - 11 zur Herstellung von Möbeln, insbesondere Sitzmöbeln, oder für Gehäuse im Elektro/Elektronikbereich.

## Claims

1. Composite component comprising a main body (3) made of a non-elastic material, and at least one insert (1), where an elastic material (2) with a wall thickness of at least 5% of the diameter of the insert sheaths the insert, and there is in essence no contact between main body (3) and insert, and the insert comprises a depression into which the elastic material (2) can be displaced under pressure.

2. Composite component according to Claim 1, **characterized in that** the non-elastic material is one selected from one or more materials of the group consisting of polyamide (PA), polyester, in particular polyethylene terephthalate (PET), polybutylene terephthalate (PBT), polyacrylates, in particular polymethyl methacrylate (PMMA), polybutylene terephthalate (PBT), polystyrene (PS), syndiotactic polystyrene, acrylonitrile-butadiene-styrene (ABS), polyolefin, in particular polypropylene (PP), polyethylene (PE), polycarbonate (PC), copolycarbonate (CoPC), copolyester carbonate, ceramics, wood and glass.

3. Composite component according to Claim 1, **characterized in that** the non-elastic material involves a thermoplastic.

4. Composite component according to Claim 1, **characterized in that** the non-elastic material involves an amorphous thermoplastic.

5. Composite component according to Claim 2, **characterized in that** the amorphous thermoplastic is one selected from the group consisting of polycarbonate, copolycarbonate, copolyester carbonate, PC blends and polymethyl methacrylate and mixtures thereof.

6. Composite component according to any of the preceding claims, **characterized in that** the Shore hardness of the elastic material is from 20 Shore A to 60 Shore D, preferably from 30 Shore A to 70 Shore A, in accordance with DIN 53505 OR ISO 868.

7. Composite component according to any of the preceding claims, **characterized in that** the elastic material involves a thermoset elastomer or thermoplastic elastomer.

8. Composite component according to any of the preceding claims, **characterized in that** the elastic material involves a silicone, polyurethane, TPU or rubber.

9. Composite component according to any of the preceding claims, **characterized in that** the elastic material has been foamed.

10. Composite component according to any of the preceding claims, **characterized in that** the insert is one made of metal or of a thermoset or ceramic.

11. Composite component according to Claim 10, **characterized in that** the insert is one made of metal.

12. Process for producing a composite part according to any of Claims 1-11, comprising a step a) of sheathing of an insert with an elastic material, optionally with an accompanying foaming process.

13. Use of a composite component according to any of Claims 1-11 for producing furniture, in particular furniture that provides seating, or for housings in the electrical/electronics sector.

## Revendications

1. Composant composite contenant un corps de base (3) en un matériau non élastique et au moins un insert (1), l'insert étant enrobé avec un matériau élastique (2) en une épaisseur de paroi d'au moins 5 % du diamètre de l'insert, et essentiellement aucun contact n'existant entre le corps de base (3) et l'insert, et l'insert contenant une cavité dans laquelle le matériau élastique (2) peut être déplacé sous pression.

2. Composant composite selon la revendication 1, **caractérisé en ce que** le matériau non élastique est choisi parmi un ou plusieurs matériaux du groupe contenant le polyamide (PA), les polyesters, notamment le polyéthylène téréphtalate (PET), le polybutylène téréphtalate (PBT), les polyacrylates, notamment le polyméthacrylate de méthyle (PMMA), le polybutylène téréphtalate (PBT), le polystyrène (PS), le polystyrène syndiotactique, l'acrylonitrile-butadiène-styrène (ABS), les polyoléfines, notamment le polypropylène (PP), le polyéthylène (PE), le polycarbonate (PC), le co-polycarbonate (CoPC), le co-polyester-carbonate, les céramiques, le bois et le verre.

3. Composant composite selon la revendication 1, **caractérisé en ce que** le matériau non élastique consiste en un plastique thermoplastique.

4. Composant composite selon la revendication 1, **caractérisé en ce que** le matériau non élastique consiste en un plastique thermoplastique amorphe.

5. Composant composite selon la revendication 2, **caractérisé en ce que** le plastique thermoplastique amorphe est choisi dans le groupe constitué par le polycarbonate, le co-polycarbonate, le co-polyester-carbonate, les mélanges de PC et le polyméthacrylate de méthyle et leurs mélanges.

6. Composant composite selon l'une quelconque des revendications précédentes, **caractérisé en ce que** le matériau élastique présente une dureté Shore comprise entre 20 Shore A et 60 Shore D, de préférence comprise entre 30 Shore A et 70 Shore A, selon DIN 53505 ou ISO868.

7. Composant composite selon l'une quelconque des revendications précédentes, **caractérisé en ce que** le matériau élastique consiste en un élastomère duroplastique ou thermoplastique.

8. Composant composite selon l'une quelconque des revendications précédentes, **caractérisé en ce que** le matériau élastique consiste en une silicone, un polyuréthane, un TPU ou un caoutchouc.

9. Composant composite selon l'une quelconque des revendications précédentes, **caractérisé en ce que** le matériau élastique est moussé.

10. Composant composite selon l'une quelconque des revendications précédentes, **caractérisé en ce que** l'insert est en métal, en un duromère ou en céramique.

11. Composant composite selon la revendication 10, **caractérisé en ce que** l'insert est en métal.

12. Procédé de fabrication d'un composant composite selon l'une quelconque des revendications 1 à 11, comprenant une étape a) d'enrobage d'un insert avec un matériau élastique, éventuellement conjointement avec un procédé de moussage.

13. Utilisation d'un composant composite selon l'une quelconque des revendications 1 à 11 pour la fabrication de meubles, notamment de sièges, ou de boîtiers dans le domaine électrique/électronique.
